# FASCICULE DE BREVET EUROPEEN

(11) **EP 2 542 713 B1**
(45) Date de publication et mention de la délivrance du brevet: **13.05.2015**
(21) Numéro de dépôt: 11712947.8
(22) Date de dépôt: 01.03.2011
(51) Int. Cl.: B29B 11/16, B29C 70/24, B29L 31/00, F01D 11/08, D03D 25/00, D03D 11/02

(54) **PREFORME FIBREUSE POUR UN SECTEUR D'ANNEAU DE TURBINE ET SON PROCEDE DE FABRICATION**
FASERVORFORM FÜR EINE TURBINENRINGABSCHNITT UND HERSTELLUNGSVERFAHREN DAFÜR
FIBROUS PREFORM FOR A TURBINE RING SECTOR AND METHOD FOR MANUFACTURING SAME

(30) Priorité: 02.03.2010 FR 1051494
(43) Date de publication de la demande: 09.01.2013
(73) Titulaire: Snecma, 75015 Paris (FR); HERAKLES, 33185 Le Haillan (FR)
(72) Inventeur: RENON, Guillaume, Jean-Claude, Robert, 77000 Vaux-le-Pénil (FR)
(74) Mandataire: Cardy, Sophie Marie
(86) Numéro de dépôt international: PCT/FR2011/050428
(87) Numéro de publication internationale: WO 2011/107708

(56) Documents cités:
- WO-A1-2009/100737
- US-A- 3 102 559
- US-A- 3 943 980
- US-A- 4 686 134
- US-A- 4 922 968

## Description

L'invention concerne une préforme fibreuse pour un secteur d'anneau de turbine, son procédé de fabrication, un secteur d'anneau de turbine intégrant une telle préforme fibreuse et un ensemble d'anneau de turbine comprenant une pluralité de tels secteurs d'anneau.

Le domaine d'application de l'invention est notamment celui des moteurs aéronautiques à turbine à gaz. L'invention est toutefois applicable à d'autres types de turbomachines, par exemple des turbines industrielles.

Les matériaux composites à matrice céramique, ou CMC, sont connus pour leurs bonnes propriétés mécaniques qui les rendent aptes à constituer des éléments de structure, et pour leur capacité à conserver ces propriétés à des températures élevées.

Dans les moteurs aéronautiques à turbine à gaz, l'amélioration du rendement et de la réduction des émissions polluantes conduisent à rechercher un fonctionnement à des températures toujours plus élevées.

Aussi, l'utilisation de CMC pour différentes parties chaudes de tels moteurs a déjà été envisagée, d'autant que les CMC ont une masse volumique inférieure à celle des matériaux métalliques traditionnellement utilisés.

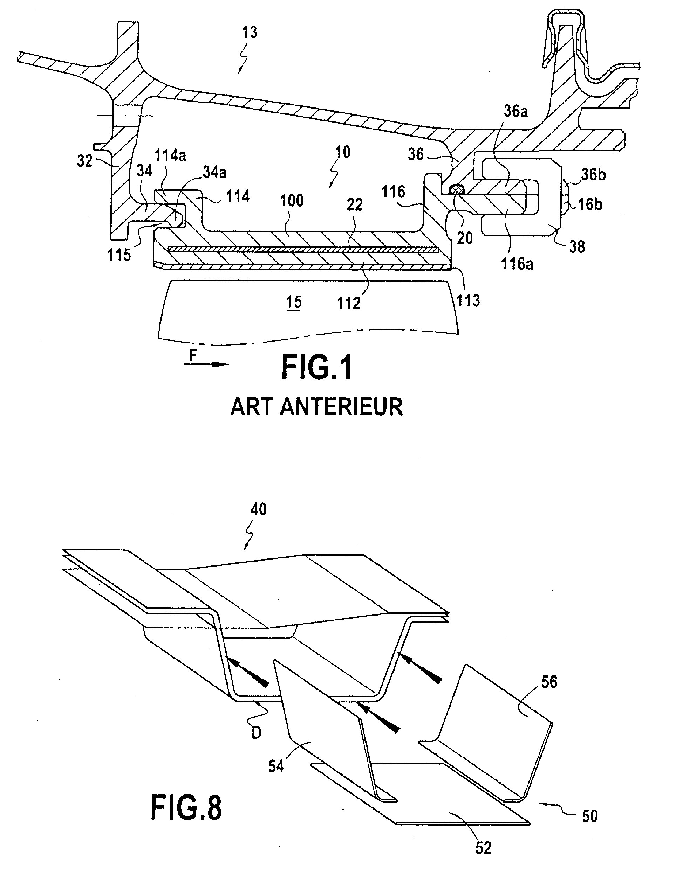

Ainsi, la réalisation de secteurs d'anneau de turbine en une seule pièce en CMC est déjà réalisée avec une structure conforme à celle de la figure 1.

La figure 1 montre un ensemble d'anneau de turbine haute pression comportant un anneau de turbine 10 en CMC et une structure métallique de support d'anneau 13. L'anneau de turbine 10 entoure un ensemble de pales rotatives 15. L'anneau de turbine 10 est formée d'une pluralité de secteurs d'anneaux 100, la figure 1 étant une vue en coupe méridienne selon un plan passant entre deux secteurs d'anneaux contigus.

Chaque secteur d'anneau 100 a une section sensiblement en forme de π (pi) inversé avec une base 112 en forme de tronçon d'anneau et dont la face interne revêtue d'une couche 113 de matériau abradable définit la veine d'écoulement du flux gazeux de la turbine. Des pattes 114, 116 s'étendent à partir de la face externe de la base 112. L'une des pattes, ou patte amont 114 présente une section méridienne sensiblement en forme de L couché et s'étend vers l'amont et définit avec l'extrémité amont de la base 112 une portion en forme de U délimitant un logement 115 s'étendant sur la profondeur de la partie d'extrémité amont 114a. L'autre patte 116, ou patte aval présente une section méridienne sensiblement en forme de T couché et s'étend vers l'aval depuis l'extrémité aval de la base 112.

Les termes « amont » et « aval » sont utilisés ici en référence au sens d'écoulement du flux gazeux dans la turbine (flèche F sur la figure 1).

La structure de support d'anneau 13 qui est solidaire du carter de turbine 30 comprend une bride radiale amont annulaire 32 portant un crochet 34 de forme annulaire à section méridienne en forme de virgule dirigée en direction axiale vers l'aval, en étant apte à venir s'engager dans le logement 115. Le montage la partie d'extrémité 34a du crochet 34 dans le logement 115 est conçu de façon à assurer l'étanchéité entre la veine d'écoulement du flux gazeux et l'extérieur des secteurs d'anneau 100, du côté amont de ceux-ci.

Du côté aval, la structure de support d'anneau 13 comprend une bride annulaire 36 à section en forme de L inversé se terminant par une partie annulaire d'appui 36a contre laquelle s'appuie la partie d'extrémité annulaire 116a de la patte 116. La partie d'extrémité 116a de la patte 116 et la partie d'appui 36a de la bride 36 sont maintenues appliquées sans jeu l'une contre l'autre au moyen d'une pince 38 à section méridienne en forme de U couché, formant un circlips, de façon connue en soi. La pince 38 est immobilisée de façon circonférentielle par rapport à la bride 36 et la patte 116 en s'insérant entre des doigts 36b et 116b faisant saillie vers l'aval à partir de la partie 36a de la bride 36 et à partir de la partie d'extrémité 116a de la patte 116.

Afin d'assurer la meilleure étanchéité possible entre la veine d'écoulement de gazeux de la turbine et l'extérieur de la turbine du côté aval de celui-ci, un joint 20 est comprimé entre la partie d'appui 36a de la bride 36 et la partie d'extrémité 116a de la patte 116. Le joint 20 est par exemple constitué par une tresse métallique immobilisée dans un logement formé dans la face intérieure de la partie d'appui 36a.

En outre, l'étanchéité inter-secteurs est assurée par des languettes d'étanchéité 22 logées dans chaque secteur d'anneau 100, à l'intérieur de la base 112, dans sa partie médiane, sur presque toute la longueur (d'amont en aval) de la base 112.

Les secteurs d'anneau 100 tels que décrits doivent présenter une épaisseur significative pour que les parties réalisées en CMC, qui entourent la languette d'étanchéité et qui forment également les deux pattes 114 et 116, soient suffisamment résistantes afin de résister aux sollicitations thermomécaniques de fonctionnement.

Une préforme fibreuse pour composants d'avions qui comprend des cavités et est obtenue par tissage tridimensionnel, est connue de US 3943 980A.

La présente invention a pour objectif de fournir une nouvelle structure de secteur d'anneau de turbine permettant en particulier d'alléger encore les secteurs d'anneau.

A cet effet, selon la présente invention, on propose une préforme fibreuse pour un secteur d'anneau de turbine, obtenue par tissage tridimensionnel et comportant une première partie formant base, deux parties en L formant patte et présentant une première branche et une seconde branche, ladite première branche prolongeant chacune des deux extrémités latérales de la première partie, et une deuxième partie reliant entre elles les deux pattes, grâce à une première liaison formée entre la deuxième partie et l'une des deux pattes et une deuxième liaison formée entre la deuxième partie et l'autre des deux pattes, cette deuxième partie délimitant, avec les pattes et la première partie, une cavité, une première bande et une deuxième bande tissées ensemble formant la première branche, une première portion de l'épaisseur de la deuxième branche et la première partie avec, entre elles une zone de déliaison situées dans la première branche et la première partie, et une troisième bande tissée formant la deuxième partie et une deuxième portion de l'épaisseur de la deuxième branche de chaque patte.

De cette manière, on comprend que par la réalisation d'une telle structure, et notamment la présence d'une cavité délimitée par la première partie, en direction interne, la deuxième partie, en direction externe, et, latéralement en amont et en aval, la première branche des deux pattes, on obtient une structure creuse qui est donc plus légère qu'une structure pleine.

De cette façon, on peut utiliser une épaisseur minimale pour le CMC, et ceci sans remettre en cause et diminuer les propriétés de résistance mécanique des secteurs d'anneau.

De préférence, on met en oeuvre une ou plusieurs des dispositions suivantes :
- l'emplacement de l'une au moins parmi la première liaison et la deuxième liaison, formées entre la deuxième partie (à savoir la troisième bande) et les deux pattes, est située sensiblement entre la première branche et la deuxième branche ;
- l'une au moins parmi la première liaison et la deuxième liaison, formées entre la deuxième partie (à savoir la troisième bande) et les deux pattes, résulte du croisement entre d'une part l'ensemble formé de la première bande et de la deuxième bande et d'autre part la troisième bande ;
- l'une au moins parmi la première liaison et la deuxième liaison, formées entre la deuxième partie (à savoir la troisième bande) et les deux pattes, est réalisé par une couture ; et
- la deuxième branche de chaque patte est formée de la superposition entre une portion de l'ensemble formé de la première bande et de la deuxième bande et d'une portion de la troisième bande.

D'autres avantages et caractéristiques de l'invention ressortiront à la lecture de la description suivante faite à titre d'exemple et en référence aux dessins annexés dans lesquels :
- la figure 1, déjà décrite, est une vue en demi-coupe méridienne montrant un ensemble d'anneau de turbine selon l'art antérieur,
- la figure 2 est une vue en perspective d'une préforme fibreuse selon l'invention,
- les figures 3 à 7 sont des représentations agrandies des plans d'armure de tissage des zones III à VII de la figure 2, et
- la figure 8 est une vue similaire à celle de la figure 2 montrant le montage des lamelles métalliques du secteur d'anneau de turbine.

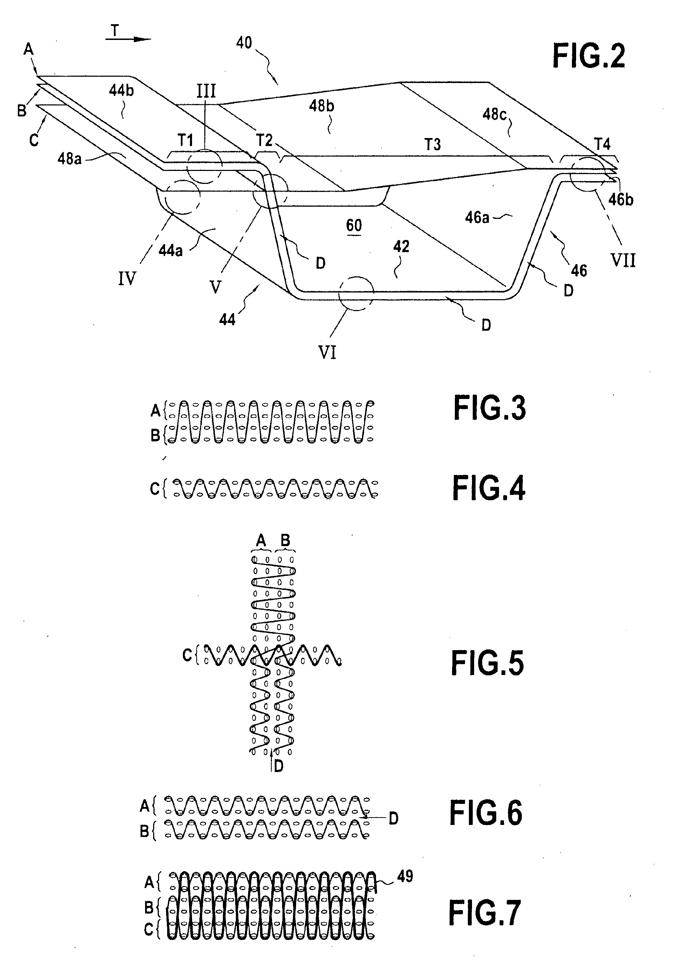

Chaque secteur d'anneau selon l'invention est réalisé en CMC par formation d'une préforme fibreuse 40 (voir la figure 2) ayant une forme voisine de celle du secteur d'anneau et densification du secteur d'anneau par une matrice céramique.

Pour la réalisation de la préforme fibreuse 40, on peut utiliser des fils en fibres céramique, par exemple des fils en fibre SiC tels que ceux commercialisés par la société japonaise Nippon Carbon sous la dénomination « Nicalon », ou des fils en fibres de carbone.

Cette préforme fibreuse 40 résulte d'une ébauche qui est réalisée par tissage tridimensionnel, ou tissage multicouches, avec aménagement de zones de déliaison pour écarter entre elles les parties de préforme qui reçoivent les lamelles métalliques formant les languettes d'étanchéité.

Sur l'exemple de réalisation des figures 2 à 8, on tisse simultanément trois bandes A, B et C pour lesquelles on utilise des fils de chaîne parallèles entre eux et s'étendant d'amont en aval.

Les termes « amont » et « aval » sont utilisés ici en référence au sens de l'avancement du tissage (flèche T sur la figure 2).

La première bande A et la deuxième bande B sont tissées conjointement avec des fils de trame communs traversant toute l'épaisseur de l'ensemble formé de la première bande A et de la deuxième bande B, afin de relier entre elles toutes les couches des fils de chaîne, et ceci dans un premier tronçon T1, ainsi que dans un quatrième tronçon T4 de la préforme 40 (voir les figures 2, 3 et 7).

Dans un deuxième tronçon T2 de transition de la préforme 40 (voir les figures 2 et 5), l'ensemble formé de la première bande A et de la deuxième bande B croise la troisième bande C.

Dans un troisième tronçon T3 de la préforme 40 (voir les figures 2, 5 et 6), la première bande A et la deuxième bande B sont tissées conjointement avec des fils de trame indépendants pour chaque bande A et B, de sorte qu'un espace est ménagé entre la première bande A et la deuxième bande B, ce qui constitue une zone de déliaison D.

La troisième bande C de la préforme 40 (voir les figures 2, 4 et 7), est tissé parallèlement à l'ensemble formé de la première bande A et de la deuxième bande B, de façon séparée et indépendante hormis dans le deuxième tronçon T2 de transition de la préforme 40 : à cet emplacement, les fils de chaîne de l'ensemble formé de la première bande A et de la deuxième bande B croisent les fils de chaîne de la troisième bande C. S'agissant des fils de trame, ceux de la troisième bande C restent attachés à cette dernière tandis que ceux de l'ensemble formé de la première bande A et de la deuxième bande B, relient conjointement toutes les couche des fils de chaîne de l'ensemble formé de la première bande A et de la deuxième bande B avant le croisement précité (en haut sur la figure 5) puis se dissocient, après le croisement précité, pour que certains des fils de trame relient entre elles toutes les couches des fils de chaîne de la première bande A et que d'autres fils de chaîne relient entre elles toutes les couches des fils de chaîne de la deuxième bande B (en bas sur la figure 5, ce qui correspond au début du troisième tronçon T3).

On définit pour la troisième bande C, d'amont en aval, un premier tronçon 48a disposé en regard du premier tronçon T1 de la préforme 40, un deuxième tronçon 48b disposé en regard du troisième tronçon T3 de la préforme 40, et un troisième tronçon 48c disposé en regard du quatrième tronçon T4 de la préforme 40.

Ainsi, dans le deuxième tronçon de transition T2, on réalise par tissage une liaison entre les trois bandes A, B et C, ce qui les solidarise entre elles et permet l'obtention d'une ébauche de préforme d'un seul tenant en sortie de l'étape de tissage.

Les figures 3 à 7 montrent en coupe chaîne (de façon orthogonale à la direction T de la figure 2) des exemples de plans d'armure successifs pour le tissage respectivement des zones de détails III à VII de la figure 2.

Dans l'exemple illustré, le nombre total de couches de fils de chaîne est de deux pour chaque bande A, B ou C.

Il peut bien entendu être différente de deux, en particulier supérieur.

Par ailleurs, on peut utiliser un nombre de couches de fils de chaîne qui n'est pas identique pour les trois bandes A, B et C.

Du fait de la forme donnée à la préforme 40 et visible sur la figure 2, on comprend que la troisième bande C est plus courte que l'ensemble formé de la première bande A et de la deuxième bande B, car cette troisième bande C reste quasiment horizontale tandis l'ensemble formé de la première bande A et de la deuxième bande B présente, après mise en forme de la préforme 40 (voir figure 2) la forme de la section transversale d'un pot de yaourt, à savoir d'un U avec des branches verticales légèrement évasées et dont l'extrémité libre est prolongée par deux bras horizontaux.

Le tissage peut être de type interlock, comme illustré.

D'autres armures de tissage tridimensionnel ou multicouches peuvent être utilisées comme par exemple des armures multi-toile ou multi-satin. On pourra se référer au document WO2006136755.

Après tissage, l'ébauche peut être mise en forme pour obtenir la préforme 40 de secteur d'anneau sans effectuer de découpe de fils, notamment de fils de chaîne.

Après cette mise en forme, on obtient la préforme 40 dont la conformation est visible sur la figure 2 et qui définit les différentes portions du secteur d'anneau qui va en résulter :
- une première partie 42 ou base, dont la face interne est destinée à former la face interne de l'anneau, résultant d'une portion centrale du troisième tronçon T3 de l'ensemble formé de la première bande A et de la deuxième bande B et délimitant une première portion de la zone de déliaison D,
- deux pattes 44 et 46 sous la forme de parties en forme de L, présentant une première branche 44a (46a) prolongeant les extrémités latérales de la première partie 42, et une deuxième branche 44b (46b) prolongeant la première branche 44a (46a) en étant parallèle à la première partie 42. Les premières branches 44a et 46a correspondent aux deux portions latérales du troisième tronçon T3 de l'ensemble formé de la première bande A et de la deuxième bande B et délimitent respectivement une deuxième partie portion et une troisième portion de la zone de déliaison D. La deuxième branche 44b de la patte amont 44, qui est en regard du premier tronçon T1 de la préforme 40, résulte de la superposition d'un tronçon latéral amont de l'ensemble formé de la première bande A et de la deuxième bande B (au dessus) et d'un tronçon latéral amont 48a de la troisième bande C (en dessous). La deuxième branche 46b de la patte aval 46, qui est en regard du quatrième tronçon T4 de la préforme 40, résulte de la superposition d'un tronçon latéral aval de l'ensemble formé de la première bande A et de la deuxième bande B (en dessous) et d'un tronçon latéral aval 48c de la troisième bande C (au dessus), et
- une deuxième partie 48b formant une paroi externe et destinée à relier entre elles les deux pattes 44 et 46 à distance et parallèlement à la première partie 42.

A cet effet, une première liaison entre la deuxième partie 48b et la patte amont 44 est réalisée par le croisement présenté précédemment et résultant du tissage des trois bandes A, B et C. De cette façon, on relie la troisième bande C formant la deuxième partie 48b et l'une des deux pattes (patte amont 44).

En outre, la deuxième liaison entre la deuxième partie 48b et la patte aval 46 se matérialise par une liaison entre la troisième bande C et l'ensemble formé de la première bande A et la deuxième bande B au niveau de l'autre des pattes (patte aval 46).

De préférence, ladite deuxième liaison est réalisée par couture (voir la figure 2 et 7) : un fil de couture 49 traverse toute l'épaisseur des trois bandes A, B et C au niveau de la patte aval 46, ce qui procure un moyen simple et rapide de figer la structure de la préforme 40. Ce fil de couture 49 permet également de refermer la cavité 60 délimitée entre la première branche 46a de la patte aval, la première partie 42, la première branche 44a de la patte amont 44 et la deuxième partie 48b.

Ainsi, selon l'invention, on met en oeuvre un procédé de fabrication d'une préforme fibreuse 40 destinée à un secteur d'anneau de turbine en une seule pièce en matériau composite à matrice céramique comportant une première partie 42 formant base et dont les deux extrémités latérales se prolongent chacune par une partie en L formant patte (partie amont 44, partie aval 46) et présentant une première branche (44a, 46a) et une deuxième branche (44b, 46b), et une deuxième partie (48b) reliant entre elles les deux pattes 44 et 46 et apte à délimiter, avec les pattes 44 et 46 et la première partie 42, une cavité 60, le procédé comportant de préférence les étapes suivantes :
- on réalise le tissage simultané d'une première bande A, d'une deuxième bande B et d'une troisième bande C,
- la première bande A et la deuxième bande B étant tissées parallèlement l'une à l'autre, et ce afin de former la première partie 42, la première branche (44a, 46a) des pattes (44, 46) et une première portion de l'épaisseur de la deuxième branche (44b, 46b) des pattes (44, 46), la première bande A et la deuxième bande B étant liées entre elles de façon à former un ensemble au niveau de la deuxième branche (44b, 46b) et formant entre elles une zone de déliaison D à l'emplacement de la première partie 42 et de la première branche (44a, 46a) des pattes (44, 46),
- on réalise le tissage de la troisième bande C en croisant ladite troisième bande C avec l'ensemble formé de la première bande A et la deuxième bande B au niveau de l'une des pattes (patte amont 44), et ce afin de relier la troisième bande C formant la deuxième partie 48b et l'une des deux pattes (patte amont 44a), et
- on réalise une liaison entre la troisième bande C et l'ensemble formé de la première bande A et la deuxième bande B au niveau de l'autre des pattes (patte aval 46a). Dans l'exemple illustré cette liaison est obtenue par couture du fil 49 tout le long de la deuxième branche 46b de la patte aval 46.

Ensuite, on prévoit que le procédé comporte en outre une étape supplémentaire selon laquelle on place des lamelles métalliques 50 dans ladite zone de déliaison D (voir la figure 8).

De préférence ces lamelles métalliques 50 se présentent sous la forme de trois lamelles avec :
- une première lamelle plate 52 venant se loger horizontalement dans la première portion de la zone de déliaison D située en regard de la première partie 42,
- une deuxième lamelle 54 en forme de L dont une branche longue vient se placer dans la deuxième portion de la zone de déliaison D située en regard de la première branche 44a de la patte amont 44, et une branche courte recouvre le bord amont de la première lamelle 52, et
- une troisième lamelle 56 en forme de L avec l'avant et l'arrière inversé (┘) dont une branche longue vient se placer dans la troisième portion de la zone de déliaison D située en regard de la première branche 46a de la patte aval 46, et une branche courte recouvre le bord aval de la première lamelle 52.

Alternativement, on peut utiliser uniquement la première lamelle 52 ou bien uniquement à la fois la première lamelle 52 et la deuxième lamelle 54.

Ensuite, pour obtenir les secteurs d'anneau, il est nécessaire de réaliser les étapes classiques ultérieures de formation d'un CMC, à savoir notamment, dans le cas d'une préforme fibreuse en fibre SiC :
- le traitement de la préforme 40 pour éliminer l'ensimage des fibres,
- la formation d'une couche mince de revêtement d'interphase sur les fibres de la préforme 40 par infiltration chimique en phase gazeuse ou CVI (« Chemical Vapor Infiltration »),
- imprégnation des fibres par une composition de consolidation, typiquement une résine éventuellement diluée dans un solvant,
- séchage de la préforme,
- découpe de la préforme,
- mise en forme par placement dans un moule conformateur,
- réticulation puis pyrolyse de la résine,
- optionnellement formation d'une deuxième couche d'interphase,
- densification de la préforme 40 par une matrice céramique, par exemple une matrice SiC, et
- dépôt d'une couche de revêtement abradable sur la face interne (tournée en direction opposée à la cavité 60) de la première partie 42.

Ainsi, on obtient un secteur d'anneau de turbine en une seule pièce en matériau composite à matrice céramique formée d'une préforme 40 telle que décrite précédemment, et de lamelles métalliques 52, 54 et 56 disposées dans la zone de déliaison D située entre la première bande A et la deuxième bande B, à l'emplacement de la première partie 42 et de la première branche 44a, 46a des pattes amont 44 et aval 46.

Le mode de montage du secteur d'anneau obtenu à partir d'une telle préforme 40 est similaire à celui mis en oeuvre dans le cas de la figure 1. Plus précisément, dans ce cas :
- la deuxième branche 46b de la patte aval 46 est logée dans la pince 38, en appui contre la partie annulaire d'appui 36a de la bride annulaire, et
- la deuxième branche 44b de la patte amont 44 est logée dans un crochet qui est placé au même emplacement que le crochet 34 de la figure 1 mais qui présente une forme de U ouvert en direction de l'aval.

De cette façon, on forme un ensemble d'anneau de turbine comprenant une pluralité de secteurs d'anneau tels que présenté dans les paragraphes qui précèdent et une structure de support d'anneau. Dans ce cas, les premières parties 42 des préformes fibreuses 40 constituent une paroi interne annulaire, les deuxièmes parties 48b des préformes fibreuses 40 constituent une paroi externe annulaire et l'extrémité de la deuxième branche 44b, 46b des deux pattes 44, 46 est engagée dans un logement de la structure de support d'anneau.

## Revendications

1. Préforme fibreuse (40) pour un secteur d'anneau de turbine, obtenue par tissage tridimensionnel et comportant une première partie (42) formant base, deux parties en L formant patte (44, 46) et présentant une première branche (44a, 46a) et une seconde branche (44b, 46b), ladite première branche (44a, 46a) prolongeant chacune des deux extrémités latérales de la première partie (42), et une deuxième partie (48b) reliant entre elles les deux pattes (44, 46), grâce à une première liaison formée entre la deuxième partie (48b) et l'une des deux pattes (44, 46) et une deuxième liaison formée entre la deuxième partie (48b) et l'autre des deux pattes (44, 46), cette deuxième partie (48b) délimitant, avec les pattes (44, 46) et la première partie (42), une cavité (60), une première bande (A) et une deuxième bande (B) tissées ensemble formant la première branche (44a, 46a), une première portion de l'épaisseur de la deuxième branche (44b, 46b) et la première partie (42) avec, entre elles une zone de déliaison situées dans la première branche (44a, 46a) et la première partie (42), et une troisième bande (C) tissée formant la deuxième partie (48b) et une deuxième portion de l'épaisseur de la deuxième branche (44b, 46b) de chaque patte (44, 46).

2. Préforme fibreuse (40) selon la revendication précédente, **caractérisée en ce que** l'emplacement de l'une au moins parmi la première liaison et la deuxième liaison, formées entre la deuxième partie (48b) et les deux pattes (44, 46), est située sensiblement entre la première branche (44a, 46a) et la deuxième branche (44b, 46b).

3. Préforme fibreuse (40) selon l'une quelconque des revendications précédentes, **caractérisée en ce que** l'une au moins parmi la première liaison et la deuxième liaison, formées entre la deuxième partie (48b) et les deux pattes (44, 46), résulte du croisement entre d'une part l'ensemble formé de la première bande (A) et de la deuxième bande (B) et d'autre part la troisième bande (C).

4. Préforme fibreuse (40) selon l'une quelconque des revendications précédentes, **caractérisée en ce que** l'une au moins parmi la première liaison et la deuxième liaison, formées entre la deuxième partie (48b) et les deux pattes (44, 46), est réalisé par une couture (49).

5. Préforme fibreuse (40) selon l'une quelconque des revendications précédentes, **caractérisée en ce que** la deuxième branche (44b, 46b) de chaque patte est formée de la superposition entre une portion de l'ensemble formé de la première bande (A) et de la deuxième bande (B) et d'une portion de la troisième bande (C).

6. Secteur d'anneau de turbine en une seule pièce en matériau composite à matrice céramique formée d'une préforme (40) selon l'une quelconque des revendications précédentes et de lamelles métalliques (52, 54, 56) disposées dans la zone de déliaison (D) située entre la première bande (A) et la deuxième bande (B), à l'emplacement de la première partie (42) et de la première branche (44a, 46a) des pattes (44, 46).

7. Ensemble d'anneau de turbine comprenant une pluralité de secteurs d'anneau selon la revendication précédente et une structure de support d'anneau, **caractérisé en ce que** les premières parties des préformes fibreuses constituent une paroi interne annulaire, **en ce que** les deuxièmes parties des préformes fibreuses constituent une paroi externe annulaire et **en ce que** l'extrémité de la deuxième branche (44b, 46b) des deux pattes (44, 46) est engagée dans un logement de la structure de support d'anneau.

8. Procédé de fabrication d'une préforme fibreuse (40) destinée à un secteur d'anneau de turbine en une seule pièce en matériau composite à matrice céramique comportant une première partie (42) formant base et dont les deux extrémités latérales se prolongent chacune par une partie en L formant patte (44, 46) et présentant une première branche (44a, 46a) et une deuxième branche (44b, 46b), et une deuxième partie (48b) reliant entre elles les deux pattes (44, 46) et apte à délimiter, avec les pattes (44, 46) et la première partie (42), une cavité (60), le procédé comportant les étapes suivantes :
- on réalise le tissage simultané tridimensionnel d'une première bande (A), d'une deuxième bande (B) et d'une troisième bande (C),
- la première bande (A) et la deuxième bande (B) étant tissées parallèlement l'une à l'autre, et ce afin de former la première partie (42), la première branche (44a, 46a) des pattes (44, 46) et une première portion de l'épaisseur de la deuxième branche (44b, 46b), la première bande (A) et la deuxième bande (B) étant liées entre elles de façon à former un ensemble au niveau de la deuxième branche (44b, 46b) et formant entre elles une zone de déliaison (D) à l'emplacement de la première partie (42) et de la première branche (44a, 46a) des pattes (44, 46),
- on réalise le tissage de la troisième bande (C) en croisant ladite troisième bande (C) avec l'ensemble formé de la première bande (A) et la deuxième bande (B) au niveau de l'une des pattes (44, 46), et ce afin de relier la troisième bande (C) formant la deuxième partie (48b) et l'une des deux pattes (44, 46) par une première liaison, et
- on réalise une deuxième liaison entre la troisième bande (C) et l'ensemble formé de la première bande (A) et la deuxième bande (B) au niveau de l'autre des pattes (44, 46).

9. Procédé de fabrication d'une préforme fibreuse (40) selon la revendication précédente, **caractérisée en ce que** ladite deuxième liaison est réalisée par couture (49).

10. Procédé de fabrication d'une préforme fibreuse (40) selon la revendication précédente, **caractérisée en ce que** le procédé comporte en outre une étape supplémentaire selon laquelle on place des lamelles métalliques (52, 54, 56) dans ladite zone de déliaison (D).

## Patentansprüche

1. Faservorform (40) für einen Turbinenringabschnitt, die durch dreidimensionales Weben erhalten wird, umfassend einen ersten, eine Basis bildenden Teil (42), zwei L-förmige Teile (44, 46), die Schenkel bilden, und die einen ersten Strang (44a, 46a) und einen zweiten Strang (44b, 46b) aufweisen, wobei der erste Strang (44a, 46a) jedes der beiden seitlichen Enden des ersten Teils (42) verlängert, und einen zweiten Teil (48b), der die beiden Schenkel (44, 46) miteinander verbindet, und zwar durch eine erste Verbindung, die zwischen dem zweiten Teil (48b) und einem der beiden Schenkel (44, 46) ausgebildet ist, und eine zweite Verbindung, die zwischen dem zweiten Teil (48b) und dem anderen der beiden Schenkel (44, 46) ausgebildet ist, wobei dieser zweite Teil (48b) mit den Schenkeln (44, 46) und dem ersten Teil (42) einen Hohlraum (60) begrenzt, ein erstes Band (A) und ein zweites Band (B), die miteinander verwebt sind und den ersten Strang (44a, 46a), einen ersten Abschnitt der Dicke des zweiten Stranges (44b, 46b) und den ersten Teil (42) bilden, mit zwischen sich einer verbindungsfreien Zone, angeordnet in dem ersten Strang (44a, 46a) und dem ersten Teil (42), und ein drittes gewebtes Band (C), das den zweiten Teil (48b) und einen zweiten Abschnitt der Dicke des zweiten Stranges (44b, 46b) jedes Schenkels (44, 46) bildet.

2. Faservorform (40) nach dem vorhergehenden Anspruch, **dadurch gekennzeichnet, dass** die Anordnung der mindestens einen unter der ersten Verbindung und der zweiten Verbindung, die zwischen dem zweiten Teil (48b) und den beiden Schenkeln (44, 46) ausgebildet sind, im Wesentlichen zwischen dem ersten Strang (44a, 46a) und dem zweiten Strang (44b, 46b) vorgesehen ist.

3. Faservorform (40) nach einem der vorhergehenden Ansprüche, **dadurch gekennzeichnet, dass** mindestens die eine unter der ersten Verbindung und der zweiten Verbindung, die zwischen dem zweiten Teil (48b) und den beiden Schenkeln (44, 46) ausgebildet sind, aus der Kreuzung zwischen einerseits der von dem ersten Band (A) und dem zweiten Band (B) gebildeten Einheit und andererseits dem dritten Band (C) stammt.

4. Faservorform (40) nach einem der vorhergehenden Ansprüche, **dadurch gekennzeichnet, dass** mindestens die eine unter der ersten Verbindung und der zweiten Verbindung, die zwischen dem zweiten Teil (48b) und den beiden Schenkeln (44, 46) ausgebildet sind, durch eine Naht (49) hergestellt ist.

5. Faservorform (40) nach einem der vorhergehenden Ansprüche, **dadurch gekennzeichnet, dass** der zweite Strang (44b, 46b) jedes Schenkels durch Übereinanderlegen zwischen einem Abschnitt der vom ersten Band (A) und vom zweiten Band (B) gebildeten Einheit und einem Abschnitt des dritten Bandes (C) gebildet ist.

6. Turbinenringabschnitt aus einem Stück aus Verbundstoff mit Keramikmatrix, die aus einer Vorform (40) nach einem der vorhergehenden Ansprüche und metallischen Lamellen (52, 54, 56) gebildet ist, die in der verbindungsfreien Zone (D) zwischen dem ersten Band (A) und dem zweiten Band (B) angeordnet sind, an der Stelle des ersten Teils (42) und des ersten Stranges (44a, 46a) der Schenkel (44, 46).

7. Turbinenringeinheit, umfassend eine Vielzahl von Ringabschnitten nach dem vorhergehenden Anspruch und eine Ringstützstruktur, **dadurch gekennzeichnet, dass** die ersten Teile der Faservorformen eine ringförmige Innenwand darstellen, dass die zweiten Teile der Faservorformen eine ringförmige Außenwand darstellen, und dass das Ende des zweiten Stranges (44b, 46b) der beiden Schenkel (44, 46) in eine Lagerung der Ringstützstruktur eingreift.

8. Verfahren zur Herstellung einer Faservorform (40), die für einen Turbinenringabschnitt in einem Stück aus einem Verbundstoff mit Keramikmatrix bestimmt ist, umfassend einen ersten Teil (42), der eine Basis bildet, und dessen beiden seitlichen Enden sich jeweils durch einen L-förmigen Teil verlängern, der Schenkel (44, 46) bildet und einen ersten Strang (44a, 46a) und einen zweiten Strang (44b, 46b) aufweist, und einen zweiten Teil (48b), der die beiden Schenkel (44, 46) miteinander verbindet und geeignet ist, mit den Schenkeln (44, 46) und dem ersten Teil (42) einen Hohlraum (60) zu begrenzen, wobei das Verfahren die folgenden Schritte umfasst:
- Durchführen des gleichzeitigen dreidimensionalen Webens eines ersten Bandes (A), eines zweiten Bandes (B) und eines dritten Bandes (C),
- wobei das erste Band (A) und das zweite Band (B) parallel zueinander gewebt werden, um den ersten Teil (42), den ersten Strang (44a, 46a) der Schenkel (44, 46) und einen Abschnitt der Dicke des zweiten Stranges (44b, 46b) zu bilden, wobei das erste Band (A) und das zweite Band (B) miteinander verbunden werden, um eine Einheit im Bereich des zweiten Stranges (44b, 46b) darzustellen, und zwischen sich eine verbindungsfreie Zone (D) an der Stelle des ersten Teils (42) und des ersten Stranges (44a, 46a) der Schenkel (44, 46) zu bilden,
- Durchführen des Webens des dritten Bandes (C) durch Kreuzen des dritten Bandes (C) mit der von dem ersten Band (A) und dem zweiten Band (B) gebildeten Einheit im Bereich eines der Schenkel (44, 46), um das dritte Band (C), das den zweiten Teil (48b) bildet, und einen der beiden Schenkel (44, 46) durch eine erste Verbindung zu verbinden, und
- Durchführen einer zweiten Verbindung zwischen dem dritten Band (C) und der von dem ersten Band (A) und dem zweiten Band (B) gebildeten Einheit im Bereich des anderen der Schenkel (44, 46).

9. Verfahren zur Herstellung einer Faservorform (40) nach dem vorhergehenden Anspruch, **dadurch gekennzeichnet, dass** die zweite Verbindung durch eine Naht (49) erfolgt.

10. Verfahren zur Herstellung einer Faservorform (40) nach dem vorhergehenden Anspruch, **dadurch gekennzeichnet, dass** das Verfahren ferner einen zusätzlichen Schritt umfasst, nach dem metallische Lamellen (52, 54, 56) in der Verbindungszone (D) angeordnet werden.

## Claims

1. A fiber preform (40) for a turbine ring sector, the preform being obtained by three-dimensional weaving and comprising a base-forming first portion (42), two tab-forming L-shaped portions (44, 46) each presenting a first branch (44a, 46a) and a second branch (44b, 46b), two side ends of the first portion (42) being extended by respective ones of said first branches (44a, 46a), and a second portion (48b) connecting together the two tabs (44, 46) by a first connection formed between the second portion (48b) and one of the two tabs (44, 46) and a second connection formed between the second portion (48b) and the other of the two tabs (44, 46), said second portion (48b) co-operating with the tabs (44, 46) and the first portion (42) to define a cavity (60), a first strip (A) and a second strip (B) that are woven together forming the first branches (44a, 46a), a first fraction of the thicknesses of the second branches (44b, 46b), and the first portion (42), there being a non-interlinked zone between them that is situated in the first branches (44a, 46a) and in the first portion (42), and a third woven strip (C) forming the second portion (48b) and a second fraction of the thickness of the second branch (44b, 46b) of each of the tabs (44, 46).

2. A fiber preform (40) according to the preceding claim, **characterized in that** the location of at least one of the first and second connections formed between the second portion (48b) and the two tabs (44, 46) is situated substantially between the first branch (44a, 46a) and second branch (44b, 46b).

3. A fiber preform (40) according to either preceding claim, **characterized in that** at least one of the first and second connections formed between the second portion (48b) and the two tabs (44, 46) is the result of the crossing of the assembly formed by the first strip (A) and the second strip (B) on the one hand and the third strip (C) on the other hand.

4. A fiber preform (40) according to any preceding claim, **characterized in that** at least one of the first and second connections formed between the second portion (48b) and the two tabs (44, 46) is formed by stitching (49).

5. A fiber preform (40) any preceding claim, **characterized in that** the second branch (44b, 46b) of each tab is formed by superposing a fraction of the assembly formed by the first strip (A) and the second strip (B) and a fraction of the third strip (C).

6. A single-piece turbine ring sector made of ceramic matrix composite material, the matrix being formed by a preform (40) according to any preceding claim and by metal strips (52, 54, 56) arranged in the non-interlinked zone (D) situated between the first strip (A) and the second strip (B) in the locations of the first portion (42) and the first branches (44a, 46a) of the tabs (44, 46).

7. A turbine ring assembly comprising a plurality of ring sectors according to the preceding claim and a ring support structure, the assembly being **characterized in that** the first fiber preform portions constitute an annular inner wall, **in that** the second fiber preform portions constitute an annular outer wall, and **in that** the ends of the second branches (44b, 46b) of the two tabs (44, 46) are engaged in respective housings of the ring support structure.

8. A method of fabricating a fiber preform (40) for a turbine ring sector as a single piece of ceramic matrix composite material comprising a base-forming first portion (42) with two side ends, each extended by a respective tab-forming L-shaped portion (44, 46), each presenting a first branch (44a, 46a) and a second branch (44b, 46b), and a second portion (48b) connecting together the two tabs (44, 46) and suitable for co-operating with the tabs (44, 46) and the first portion (42) to define a cavity (60), the method comprising the following steps:
• performing simultaneously three-dimensional weaving of a first strip (A), of a second strip (B), and of a third strip (C);
• the first strip (A) and the second strip (B) being woven parallel to each other so as to form the first portion (42), the first branches (44a, 46a) of the tabs (44, 46), and first fractions of the thicknesses of the second branches (44b, 46b), the first strip (A) and the second strip (B) being interlinked so as to form an assembly in the second branches (44b, 46b) and forming between them a non-interlinked zone (D) at the location of the first portion (42) and of the first branches (44a, 46a) of the tabs (44, 46);
• weaving the third strip (C) so that said third strip (C) crosses the assembly formed by the first strip (A) and the second strip (B) at one of the tabs (44, 46), so as to connect the third strip (C) forming the second portion (48b) with one of the two tabs (44, 46) via a first connection; and
• making a second connection between the third strip (C) and the assembly formed by the first strip (A) and the second strip (B) at the other tab (44, 46).

9. A method of fabricating a fiber preform (40) according to the preceding claim, **characterized in that** said second connection is made by stitching (49).

10. A method of fabricating a fiber preform (40) according to the preceding claim, **characterized in that** the method also includes an additional step in which metal strips (52, 54, 56) are placed in said non-interlinked zone (D).
